# EUROPEAN PATENT SPECIFICATION

(11) **EP 0 658 458 B1**
(45) Date of publication and mention of the grant of the patent: **25.02.1998**
(21) Application number: 94203518.9
(22) Date of filing: 05.12.1994
(51) Int. Cl.: B60K 37/00, B62D 49/06

(54) **Of seat independently movable control console for tractors**
Vom Sitz unabhängig bewegbare Steuerkonsole für Traktoren
Console de commande mobile indépendamment du siège pour tracteurs

(30) Priority: 17.12.1993 US 169848; 17.12.1993 US 169849
(43) Date of publication of application: 21.06.1995
(73) Proprietor: NEW HOLLAND U.K. LIMITED, Basildon, Essex SS14 3AD (GB)
(72) Inventor: Templeton, David J., New Holland, PA 17557 (US); Strong, Russell W., Craftsbury Common, VT 05827 (US); Jennings, Richard E., Lisbon, IA 52253 (US)
(74) Representative: Vandenbroucke, Alberic

(56) References cited:
- DE-U- 6 929 353
- GB-A- 2 228 905
- US-A- 4 471 848
- US-A- 4 733 745
- US-A- 5 086 869

## Description

This invention relates generally to off-road motor vehicles, such as tractors, and more particularly, to a console, housing operative controls for the vehicle, that is shiftable to position the operative controls to a convenient position selectable by the operator.

Tractors, particularly tractors used in an agricultural environment, are provided with an operator's seat that is shiftable in a fore-and-aft direction to place the operator at a comfortable location relative to the steering wheel. Agricultural tractors are often provided with an operator's seat that is also rotatable approximately 15° to 30° clockwise to facilitate the need for the operator to look over his or her right shoulder to view the operation of an implement being towed by the tractor behind the operator.

Typically, many of the controls for the operation of the tractor and most of the power-takeoff and hydraulic controls for controlling the operation of the implement operatively connected to the tractor and usually positioned rearwardly of the tractor, are located in a fixed console adjacent the right side of the operator's seat for convenient manipulation thereof by the operator, particularly while the operator is operating the towed implement as well. The positioning of the operator's seat in the fore-and-aft direction, and particularly the positioning of the operator's seat to the clockwise rotated position, causes a positional variance between the fixed console and the movable seat. The result to the operator is that controls that are conveniently accessible in one position of the operator's seat are no longer in the desired positional relationship to the operator when the seat position is moved to an alternative position.

To attenuate some of the drawbacks mentioned, US-A-4.471.848 proposes to provide a control panel assembly which is pivotally connected to a floor panel of an operators station to allow the control panel to be positioned in an infinite number of positions. On the control panel, a grip is provided for facilitating adjustment by the operator whereas close to the floor panel a locking arrangement is operational to retain the control panel assembly at a selected location. This arrangement therefore suffers from the disadvantage that an operator requires both hands to carry out an adjustment of the control panel to a desired position and will have difficulty to obtain such a desired position as a result of the total freedom of movement of the control panel in whatever direction once the position lock of the panel has been released. Consequently, repeated adjustment certainly will not be convenient.

It is therefore an objective of the present invention to overcome the aforementioned disadvantages of the prior art by providing a tractor console which is selectively and conveniently movable to position the operative controls housed thereon in a conveniently accessible position as desired by the operator.

According to the present invention a vehicle is provided comprising :
- a mobile chassis;
- steering controls supported by said chassis for controlling the direction of movement of said mobile chassis over the ground;
- a seat supported adjacent said steering controls for at least fore-and-aft movement relative thereto; and
- a control console supporting a plurality of operational control devices adjacent said seat; said control console being independently moveable relative to said seat.

The tractor is characterized in that a support assembly supports said control console on said chassis allowing said console to move relative to said seat along a predetermined path.

The control console can be shifted to locate the operative controls to correspond to the rotation of the operator's seat to an implement operating position. Furthermore, the shiftable control console is infinitely positionally variable within a preselected range of motion relative to the operator's seat, whereby the operator can manually position the operative controls to locate these controls at his convenience irrespective of the relative position of his seat.

To this end and according to a first embodiment the control console is mounted on a pair of pivoted linkages oriented to allow the console to move along a preselected path to rotate the console as it is shifted. The movements of the shiftable console are electrically actuated through manipulation of a switch located on the console.

According to an alternative embodiment the control console is cooperable with a guide assembly to control the orientation of the control console as it is moved fore-and-aft relative to the operator's seat.

A control console in accordance with the present invention will now be described in greater detail, by way of example, with reference to the accompanying drawings, in which :
Figure 1 is a top plan view of the interior of the operator's cab of the tractor shown in Figure 6, the range of the fore-and-aft and rotational positional movements of the operator's seat being shown in phantom, the range of independent movement of the shiftable control console also being shown in phantom;
Figure 2 is an enlarged top plan view of the control console;
Figure 3 is a top plan view of the shiftable console with the top panel removed for the purpose of depicting the console subframe and mounting linkages with greater clarity, several representative control levers being shown in phantom and one control lever being exemplarily shown in solid lines;
Figure 4 is a side elevational view of the console subframe and mounting linkage corresponding to lines 4 - 4 of Figure 3, a couple of representative control levers being shown in phantom;
Figure 5 is a schematic top plan view of the console mounting linkage to depict more clearly the orientation thereof and the range of movement afforded to the shiftable console;
Figure 6 is a side elevational view of a tractor incorporating the principles of the instant invention, the tractor having a representative implement connected thereto to be operable rearwardly thereof;
Figure 7 is a top plan view of the control console similar to that of Figure 2, but depicting an alternative embodiment of the shiftable console;
Figure 8 is a partial cross-sectional view corresponding to lines 8 - 8 of Figure 7 to depict a side elevational view of the control console, a lower portion of the console being broken away to better show the guides and linear actuator for controlling the shifting movement of the console; and
Figure 9 is a cross-sectional view of the control console taken along lines 9 - 9 of Figure 8 to better show the guide assembly, including the slots formed therein to control the movement of the console.

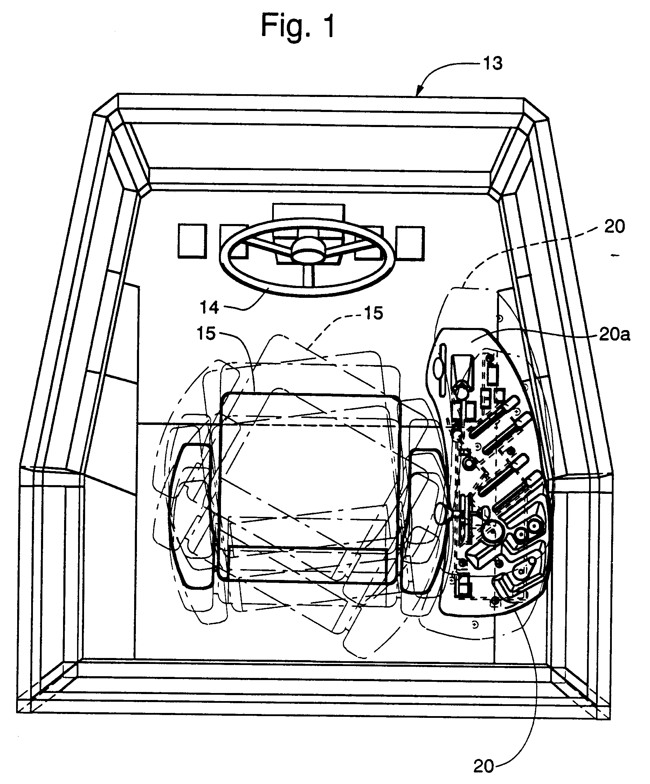

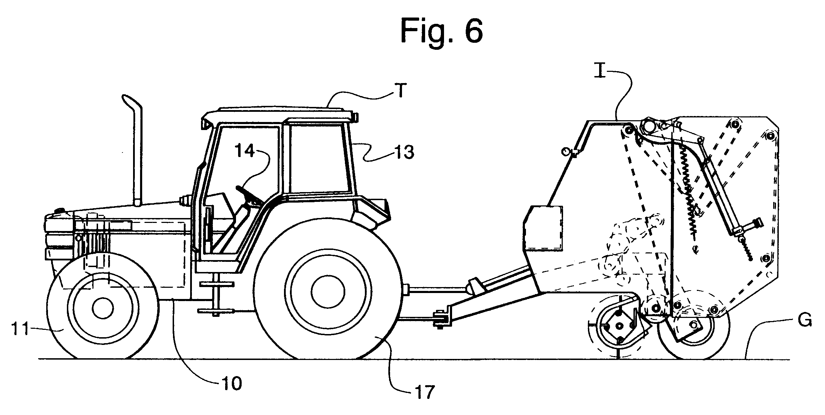

Referring now to the drawings and, more particularly, to Figures 1 and 6, a representative view of an agricultural tractor incorporating the principles of the instant invention can best be seen. Left and right references are used as a matter of convenience and are determined by standing at the rear of the tractor and facing the forward end in the normal direction of travel. The tractor chassis 10 houses a conventional engine 12 serving to provide operational power for the tractor T and the attached implement I, and an operator's cab 13 positioned in an elevated location. The operator's cab 13 includes a steering control 14, positioned forwardly of the operator's seat 15 for conventionally operating the steering of the front wheels 11 in a known manner, and a control console 20 located to the right of the operator's seat 15 to locate controls for operating the tractor T and the attached implement I in a conventional manner. The chassis 10 is supported above the ground G in a conventional manner by forward steerable wheels 11 and rearward drive wheels 17 rotatably mounted in a customary transversely spaced orientation.

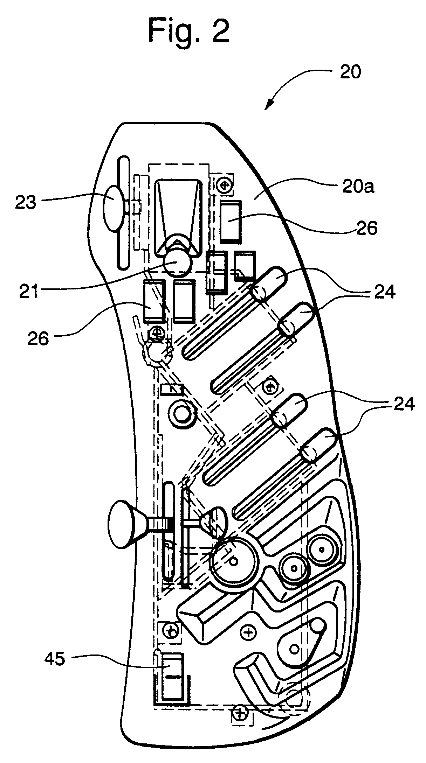

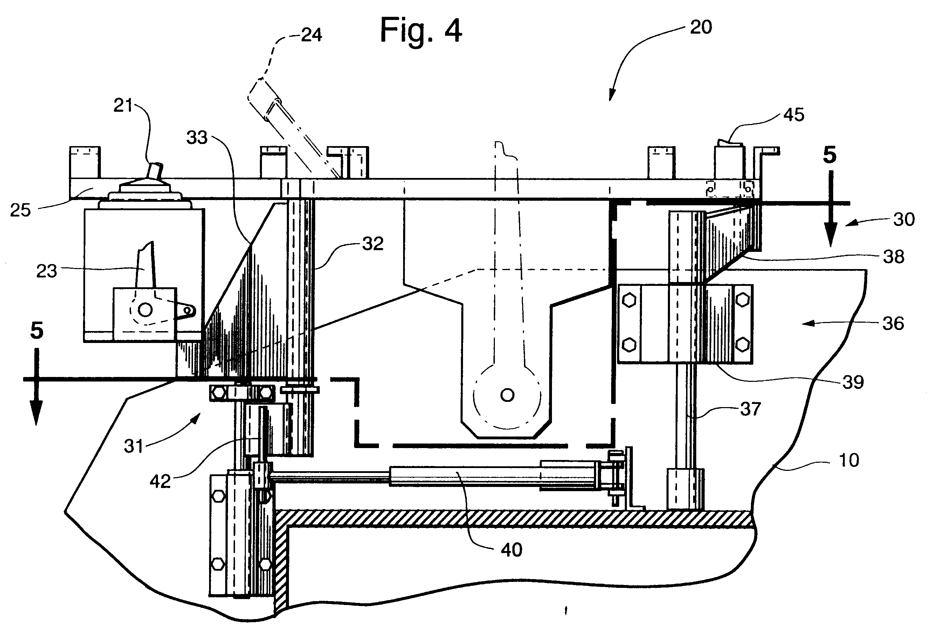

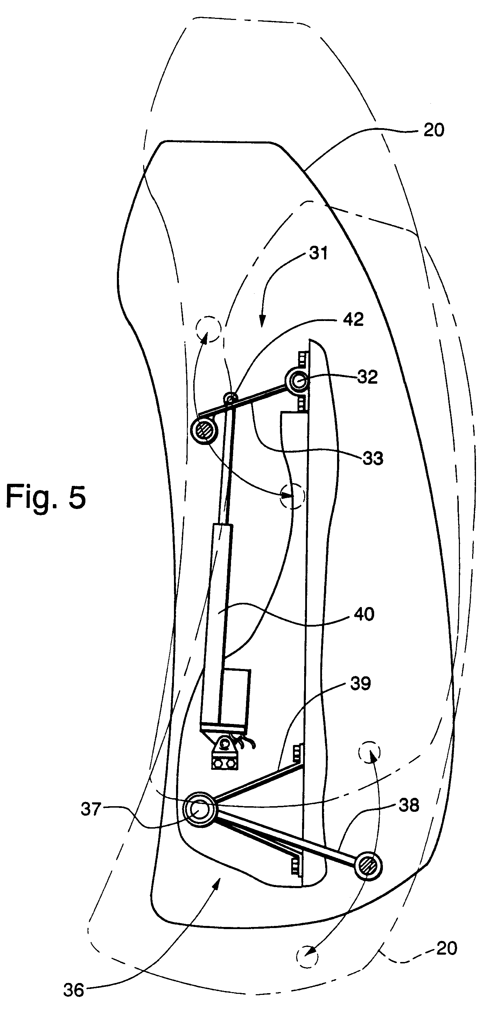

Referring now to Figures 1 - 5, one skilled in the art will realize that the control console 20 is positionally movable relative to the operator's seat 15. The control console 20 is provided with a plurality of conventional control levers, switches, etc. which are operable through electronic devices or flexible cables to control various functions of the tractor T or the attached implement I. By way of example, the transmission shift lever 21 is associated with electronic switches that are electrically coupled to a transmission controller, such as described in US-A-5.036.718. Consequently, the operator can shift gears in the transmission by appropriate manipulation of the transmission control lever 21, without the requirement of fixed linkages to effect a shifting of the transmission gears in a mechanical manner.

As further examples, the throttle control 23 controlling the speed of the engine 12 is pivoted on the subframe 25 of the console 20 and is connected to the engine by way of a conventional flexible cable (not shown). Likewise, the hydraulic control levers 24 are connected by conventional flexible cables (not shown) to corresponding hydraulic spools (not shown) for controlling the associated hydraulic function of the tractor hydraulic system, to which the implement I is normally operatively connected to power various hydraulic functions. Other controls in the form of switches 26 are connected via wires to the tractor's electrical system to control other operative functions of the tractor, such as solenoids, etc. None of the controls 21, 23, 24 and 26 are straight mechanical controls requiring fixed linkages. As a result, the control console 20 can be somewhat flexible in its orientation relative to the operator's seat 15.

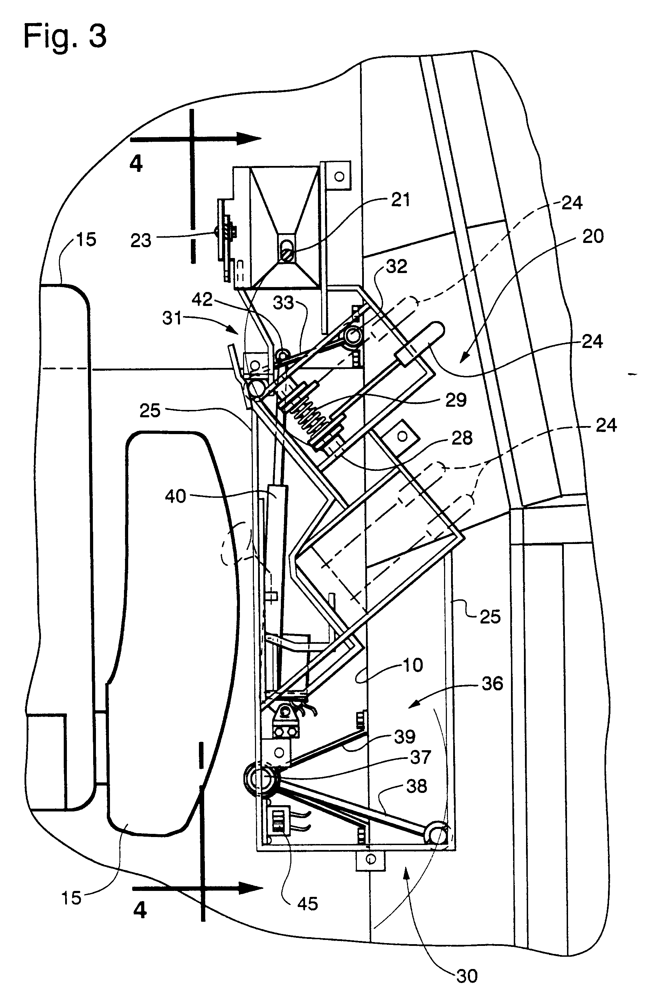

The support of the console subframe 25 to permit movement thereof is best seen in Figures 3 - 5. In the case of pivotal hydraulic control levers 24, the subframe 25 supports a pivot axis 28 about which the lever 24 pivots to effect movement of the flexible cable (not shown) through which the operative control is effected. These pivot axes 28 support a conventional spring-loaded friction restrictor 29 cooperatively associated with the lever 24 to restrict pivotal movement thereof in a known manner. The subframe 25 also provides support for the top panel 20a through which and on which the control mechanisms 21, 23, 24 and 26 are situated.

The subframe 25 is pivotally supported by a mounting linkage 30 to allow movement of the console 20 in a manner described in greater detail below. The mounting linkage 30 includes a forward pivot assembly 31 and a rearward pivot assembly 36 defining generally vertical pivot axes 32, 37, respectively, supported by the chassis 10. Each pivot assembly 31, 36 further includes a swing arm 33, 38, respectively, having a first end connected to and being rotatable about the corresponding pivot axis and a second end connected to the subframe 25 so that the subframe 25 is movable about the pivot axes 32, 37.

The rear pivot assembly 36 also includes a bracket 39 connected to the chassis 10 to locate the rear pivot axis 37 laterally of the front pivot axis 32, such that the rear pivot axis 37 is positioned to the left of a longitudinal line passing through the front pivot axis 32. While the front swing arm 33 extends to the left of the front pivot axis 32, the rear swing arm 38 extends to the right of the rear pivot axis 37, passing over the bracket 39. Beginning at a median location depicted in Figures 3 - 5, both the front and rear swing arms 33, 38 extend slightly rearwardly of a transverse line passing through the corresponding pivot axis 32, 37.

As a result of this swing arm orientation, the forward movement of the console subframe 25 passes through a portion of an arc that is substantially balanced fore-and-aft of the aforesaid transverse line passing through the corresponding pivot axis 32, 37. The net result is that the movement of the console subframe 25 forwardly of the median position is substantially fore-and-aft with very little transverse movement. On the other hand, the rearward movement of the subframe 25 from the median position passes along an arc segment lying entirely on the rearward side of the aforesaid transverse line passing through the corresponding pivot axes 32, 37.

One skilled in the art will readily realize that the rearward movement of the subframe 25 from the median position will involve a transverse component of motion about the axis 32, 37. Since the front and rear swing arms 33, 38 extend in opposing directions, the front portion of the console subframe 25 will move to the right away from the operator's seat 15, while the rear portion of the console subframe 25 will move to the left toward the operator's seat 15 as the subframe moves rearwardly. This resultant cocking of the orientation of the console subframe 25 as it moves rearwardly allows the console 20 to rotate about 15° to 30° clockwise to mimic the rotational movement of the operator's seat to the implement operating position.

The power for actuating the shifting movement of the console 20 is provided by an electrical actuator 40 having a base end fixed to the chassis 10 and a telescopic end detachably connected to a tab 42 fixed to the front swing arm 33. The electrical control for the actuator 40 is mounted on the top panel 20a of the console 20 in the form of a toggle switch 45 for convenient access by the operator. Accordingly, when the operator desires a forward movement of the console 20, the toggle switch 45 is pushed in one direction to supply current to the actuator 40 to effect an extension thereof. The opposite manipulation of the toggle switch 45 reverses the current flow to the actuator 40 and causes a retraction of the actuator 40 and a rearward movement of the console 20.

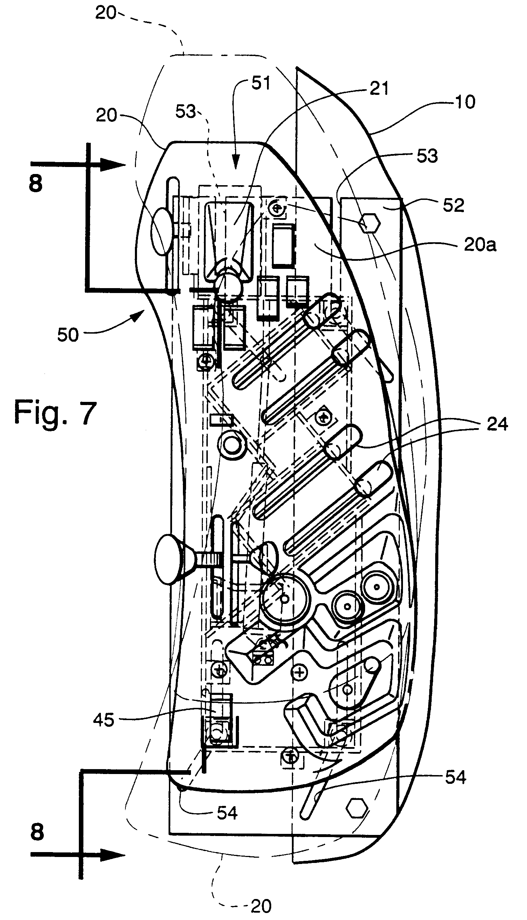

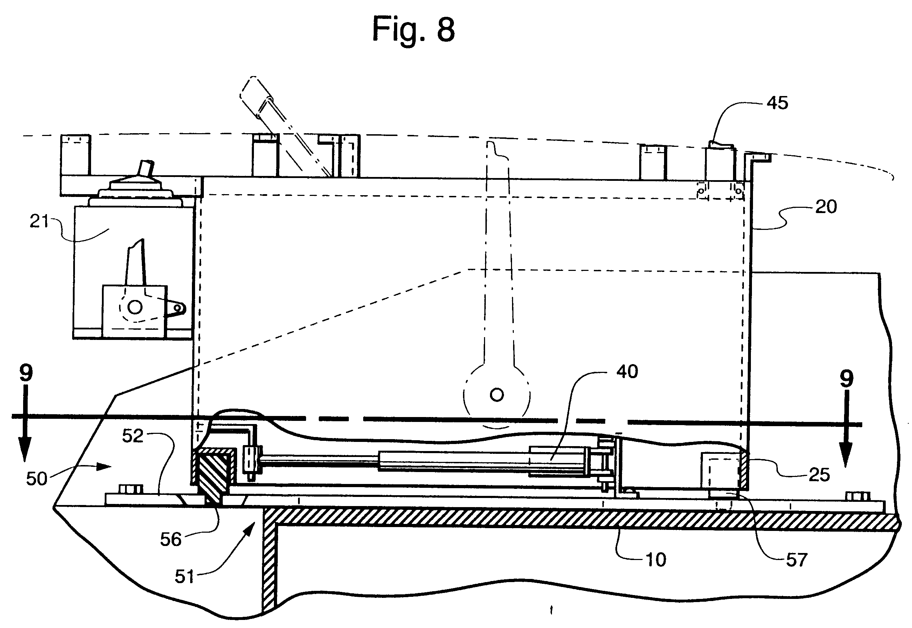

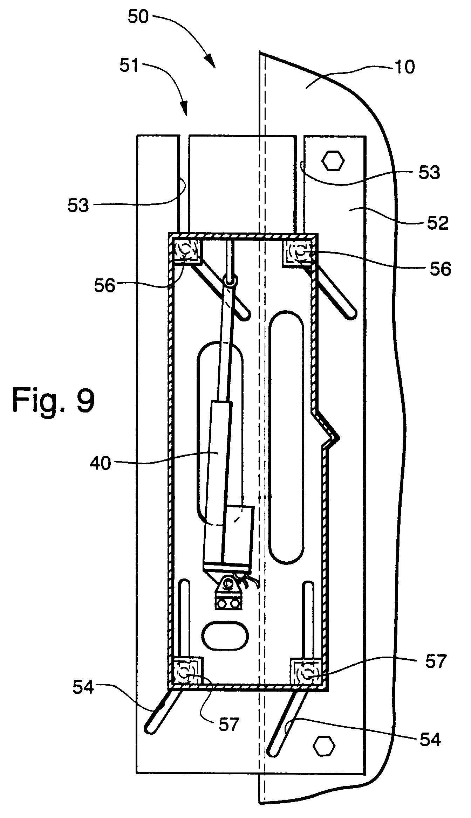

Referring now to the alternative embodiment depicted in Figures 7 - 9, one skilled in the art will readily realize that the movement of the console 20 can be guided with greater control by utilizing tracks to direct the motion of the console 20. In the preferred embodiment of Figures 1 - 5, the orientation of the shiftable console 20 was controlled through manipulation of the location of the swing arcs of the swing arms 33, 38 and the corresponding pivots 32, 37. By eliminating the swing arms 33, 38 and the associated pivot assemblies 31, 36, the console 20 can be supported on a guide assembly 50 to control the orientation of the console 20 during its fore-and-aft movement.

The guide assembly 50 includes a tracking device 51 fixed to the chassis 10. For ease of manufacture, the tracking device 51 is preferably constructed as a plate 52 affixed to the tractor chassis 10 and having formed therein a pair of front slots 53 and a pair of rear slots 54. One skilled in the art will recognize that tracks (not shown) could have been utilized which either could have been fixed to the plate 52 or directly to the chassis 10 to provide a similar function.

The subframe 25 of the console 20 is supported on top of the plates 52 and is provided with front and rear guides 56, 57 that extend downwardly through the corresponding front and rear slots 53, 54 to guide the movement of the console 20. Although the guides 56, 57 could be constructed of or incorporate anti-friction material such as teflon or nylon, additional conventional anti-friction means (not shown) may be required to facilitate the movement of the subframe 25 over the plate 52. Each of the slots 53, 54 is formed in a specific orientation to provide the desired orientation of the console 20. The front slots 53 have a rearward portion that extends away from the operator's seat 15, while the rearward portion of the rear guides 54 extends toward the operator's seat 15.

This particular slot configuration will provide the same general movement of the console 20 as described above with respect to Figures 1 - 5. The console 20 will have a linear fore-and-aft movement until the console 20 nears the rearward limit of the range of movement permitted by the actuator 40, whereupon the console 20 will rotate counterclockwise approximately 15° to 30° to correspond to the rotation of the operator's seat 15 to the implement operating position. One skilled in the art will readily recognize that the forward portions of the slots 53, 54 could be oriented in a different manner to effect any desired orientation of the console 20 when positioned anywhere within the range of movement permitted by the actuator 40. Furthermore, the use of the guide assembly 50 would permit alternative options as to the desired orientations of the console 20 simply by allowing the plate 52 to be replaceable to provide differently oriented slots 53, 54.

## Claims

1. A vehicle comprising :
- a mobile chassis (10);
- steering controls (14) supported by said chassis (10) for controlling the direction of movement of said mobile chassis over the ground;
- a seat (15) supported adjacent said steering controls (14) for at least fore-and-aft movement relative thereto; and
- a control console (20) supporting a plurality of operational control devices (21, 23, 24, 26) adjacent said seat (15); said control console (20) being independently moveable relative to said seat (15); and
characterized in that a support assembly (30, 50) supports said control console (20) on said chassis (10) allowing said console (20) to move relative to said seat along a predetermined path.

2. A vehicle according to claim 1 characterized in that said seat (15) is rotatable from a vehicle operating position oriented in a forward direction to an implement operating position rotated through a predetermined angular rotation from said vehicle operating position to facilitate the observation of the operation of an implement towed behind said vehicle while said vehicle is moving in a forward direction.

3. A vehicle according to claims 1 or 2 characterized in that said control console (20) is movable forwardly and rearwardly from a median position, the movement thereof forwardly of said median position is generally in a longitudinal direction with minimal transverse movement.

4. A vehicle according to claim 2 characterized in that the movement of said control console (20) rearwardly of said median position results in a transverse rotation of said control console to correspond to the predetermined angular rotation of said seat when moving from said tractor operating position to said implement operating position.

5. A vehicle according to any of the preceding claims characterized in that said support assembly (30, 50) comprises a guide assembly (50) fixed to the chassis (10), said guide assembly (50) controlling the orientation of said control console (20) within the range of movement thereof.

6. A vehicle according to claim 5 characterized in that said guide assembly (50) includes guide means (51) cooperable with both the forward and rearward portions of said control console (20) for orientation of said console (20) during movement thereof.

7. A vehicle according to claim 6 characterized in that said guide means (51) includes a plate (52) having a forward slot (53) and a rearward slot (54), said control console (20) being provided with front and rear guide members (56, 57) extending through the corresponding said slots (53, 54) to guide the movement of said control console (20).

8. A vehicle according to claim 7 characterized in that each of said slots (53, 54) includes an oblique portion to effect a rotation of said control console (20) during movement thereof.

9. A vehicle according to claim 8 characterized in that said oblique portions are oriented at the rearward portion of said slots (53, 54) to effect an angular rotation of said control console (20) near a rearward limit of a range of movements permitting said control console (20) to correspond to the implement operating position of said operator's seat (15).

10. A vehicle according to any of the claims 1 to 4 characterized in that said support assembly (30, 50) comprises a mounting linkage (30) interconnecting said control console (20) and said chassis (10) to support said control console (20) for movement relative to said seat (15).

11. A vehicle according to claim 10 characterized in that said mounting linkage (30) includes forward and rearward, longitudinally spaced pivot assemblies (31, 36), defining forward and rearward pivot axes (32, 37), respectfully, about which said control console (20) is pivotally movable.

12. A vehicle according to claim 11 characterized in that each of said pivot assemblies (31, 36) includes a swing arm (33, 38) rotatable from one end thereof about the respective said pivot axis (32, 37) and carrying said control console (20) at an opposing end thereof.

13. A vehicle according to claim 12 characterized in that said forward and rearward swing arms (33, 38) extend from their respective said pivot axes (32, 37) in opposite directions to effect a transverse rotation of said control console (20) when moving rearwardly from its median position.

14. A vehicle according to claim 13 characterized in that, when said control console (20) is in said median position, said swing arms (33, 38) are oriented at a predetermined angular displacement rearwardly from a transverse orientation, the extent of forward movement of said control console (20) from said median position being limited to approximately twice said predetermined angular displacement so that the overall forward movement of said control console (20) from said median position does not result in any substantial transverse movement of said control console (20).

15. A vehicle according to claim 14 characterized in that the movement of said control console (20) rearwardly of said median position involves a pivotal movement of said swing arms (33, 38) toward a longitudinal line passing through the corresponding said pivot axis (32, 37), resulting in a transverse displacement of said control console (20), the orientation of said swing arms (33, 38) in opposing directions resulting in a transverse rotation of said control console (20).

16. A vehicle according to claim 15 characterized in that said swing arms (33, 38) are oriented such that the extent of movement thereof rearwardly of said median position results in a transverse rotation substantially equivalent to the angular rotation of said seat (15) when moved from said tractor operating position to said implement operating position.

17. A vehicle according to any of the claims 11 to 16 characterized in that said forward and rearward pivot axes (32, 37) are transversely spaced.

18. A vehicle according to any of the preceding claims characterized in that a linear actuator (40) is coupled between said chassis (10) and said control console (20) to effect a fore-and-aft movement of said control console (20).

19. A vehicle according to claim 18 characterized in that said linear actuator (40) is electrically controlled from a switch (45) mounted on said control console (20).

## Patentansprüche

1. Fahrzeug mit:
- einem ortsbeweglichen Fahrgestell (10);
- Lenkungs-Steuereinrichtungen (14), die von dem Fahrgestell (10) gehaltert sind, um die Bewegungsrichtung des ortsbeweglichen Fahrgestells über dem Boden zu steuern;
- einem Sitz (15), der benachbart zu den Lenkungs-Steuereinrichtungen (14) für eine zumindest vorwärts- und rückwärtsgerichtete Bewegung relativ zu diesen gehaltert ist; und
- einer Steuerkonsole (20), die eine Vielzahl von Betriebs-Steuereinrichtungen (21, 23, 24, 26) benachbart zu dem Sitz (15) haltert, wobei die Steuerkonsole (20) unabhängig bezüglich des Sitzes (15) beweglich ist,
dadurch **gekennzeichnet,**
daß eine Halterungsbaugruppe (30, 50) die Steuerkonsole (20) auf dem Fahrgestell (10) haltert und eine Bewegung der Konsole (20) gegenüber dem Sitz entlang einer vorgegebenen Bahn ermöglicht.

2. Fahrzeug nach Anspruch 1,
dadurch **gekennzeichnet,**
daß der Sitz (15) von einer Fahrzeug-Betriebsstellung, die in einer Vorwärtsrichtung ausgerichtet ist, auf eine Anbaugeräte-Betriebsstellung drehbar ist, die um eine vorgegebene Winkeldrehung gegenüber der Fahrzeug-Betriebsstellung verdreht ist, um die Beobachtung der Betriebsweise eines Anbaugerätes zu erleichtern, das hinter dem Fahrzeug geschleppt wird, während sich das Fahrzeug in einer Vorwärtsrichtung bewegt.

3. Fahrzeug nach Anspruch 1 oder 2,
dadurch **gekennzeichnet,**
daß die Steuerkonsole (20) von einer Mittelstellung aus nach vorn und nach hinten beweglich ist, wobei ihre Bewegung in Vorwärtsrichtung von der Mittelstellung aus allgemein in einer Längsrichtung mit einer minimalen Querbewegung erfolgt.

4. Fahrzeug nach Anspruch 2,
dadurch **gekennzeichnet,**
daß die Bewegung der Steuerkonsole (20) in Rückwärtsrichtung von der Mittelstellung aus zu einer Querdrehung der Steuerkonsole derart führt, daß diese der vorgegebenen Winkeldrehung des Sitzes entspricht, wenn dieser von der Traktor-Betriebsstellung auf die Anbaugeräte-Betriebsstellung bewegt wird.

5. Fahrzeug nach einem der vorhergehenden Ansprüche,
dadurch **gekennzeichnet,**
daß die Halterungsbaugruppe (30, 50) eine Führungsbaugruppe (50) umfaßt, die an dem Fahrgestell (10) befestigt ist, wobei die Führungsbaugruppe (50) die Ausrichtung der Steuerkonsole (20) innerhalb deren Bewegungsbereiches steuert.

6. Fahrzeug nach Anspruch 5,
dadurch **gekennzeichnet,**
daß die Führungsbaugruppe (50) Führungseinrichtungen (51) einschließt, die sowohl mit den vorderen als auch den hinteren Teilen der Steuerkonsole (20) zusammenwirken können, um die Konsole (20) während deren Bewegung auszurichten.

7. Fahrzeug nach Anspruch 6,
dadurch **gekennzeichnet,**
daß die Führungseinrichtung (51) eine Platte (52) mit einem vorderen Schlitz (53) und einem hinteren Schlitz (54) einschließt, wobei die Steuerkonsole (20) mit vorderen und hinteren Führungsteilen (56, 57) versehen ist die sich durch den entsprechenden der Schlitze (53, 54) erstrecken, um die Bewegung der Steuerkonsole (20) zu führen.

8. Fahrzeug nach Anspruch 7,
dadurch **gekennzeichnet,**
daß jeder der Schlitze (53, 54) einen schrägverlaufenden Abschnitt einschließt, um eine Drehung der Steuerkonsole (20) während deren Bewegung zu bewirken.

9. Fahrzeug nach Anspruch 8,
dadurch **gekennzeichnet,**
daß die schrägverlaufenden Abschnitte am hinteren Abschnitt der Schlitze (53, 54) ausgerichtet sind, um eine Winkeldrehung der Steuerkonsole (20) in der Nähe der hinteren Grenze eines Bereiches von Bewegungen zu bewirken, die es der Steuerkonsole (20) ermöglichen, der Anbaugeräte-Betriebsstellung des Sitzes (15) des Fahrers zu entsprechen.

10. Fahrzeug nach einem der Ansprüche 1 bis 4,
dadurch **gekennzeichnet,**
daß die Halterungsbaugruppe (30, 50) ein Befestigungsgestänge (30) umfaßt, das die Steuerkonsole (20) mit dem Fahrgestell (10) verbindet, um die Steuerkonsole (20) für eine Bewegung gegenüber dem Sitz (15) zu haltern.

11. Fahrzeug nach Anspruch 10,
dadurch **gekennzeichnet,**
daß das Befestigungsgestänge (30) vordere und hintere, mit Längsrichtungsabstand angeordnete Schwenkbaugruppen (31, 36) einschließt, die vordere bzw. hintere Schwenkachsen (32 bzw. 37) bilden, um die die Steuerkonsole (20) schwenkbar beweglich ist.

12. Fahrzeug nach Anspruch 11,
dadurch **gekennzeichnet,**
daß jede der Schwenkbaugruppen (31, 36) einen Schwenkarm (33, 38) einschließt, der an einem Ende um die jeweilige der Schwenkachsen (32, 37) drehbar ist und an seinem gegenüberliegenden Ende die Steuerkonsole (20) trägt.

13. Fahrzeug nach Anspruch 12,
dadurch **gekennzeichnet,**
daß sich die vorderen und hinteren Schwenkarme (33, 38) von ihren jeweiligen Schwenkachsen (32, 37) aus in entgegengesetzten Richtungen erstrecken, um eine Querdrehung der Steuerkonsole (20) zu bewirken, wenn sich diese ausgehend von ihrer Mittelstellung nach hinten bewegt.

14. Fahrzeug nach Anspruch 13,
dadurch **gekennzeichnet,**
daß, wenn sich die Steuerkonsole (20) in der genannten Mittelstellung befindet, die Schwenkarme (33, 38) unter einer vorgegebenen Winkelversetzung rückwärts von einer Querrichtung ausgerichtet sind, wobei das Ausmaß der Vorwärtsbewegung der Steuerkonsole (20) von der Mittelstellung aus auf ungefähr das Zweifache der vorgegebenen Winkelbewegung begrenzt ist, so daß die Vorwärts-Gesamtbewegung der Steuerkonsole (20) von der Mittelstellung nicht zu einer erheblichen Querbewegung der Steuerkonsole (20) führt.

15. Fahrzeug nach Anspruch 14,
dadurch **gekennzeichnet,**
daß die Bewegung der Steuerkonsole (20) von der Mittelstellung aus in Rückwärtsrichtung eine Schwenkbewegung der Schwenkarme (33, 38) in Richtung auf eine längsverlaufende Linie beinhaltet, die durch die entsprechende der Schwenkachsen (32, 37) verläuft, was zu einer Querbewegung der Steuerkonsole (20) führt, wobei die Ausrichtung der Schwenkarme (33, 38) in entgegengesetzten Richtungen zu einer Querdrehung der Steuerkonsole (20) führt.

16. Fahrzeug nach Anspruch 15,
dadurch **gekennzeichnet,**
daß die Schwenkarme (33, 38) derart ausgerichtet sind, daß das Ausmaß ihrer Bewegung in Rückwärtsrichtung der Mittelstellung zu einer Querdrehung führt, die im wesentlichen äquivalent zu der Winkeldrehung des Sitzes (15) ist, wenn dieser von der Traktor-Betriebsstellung auf die Anbaugeräte-Betriebsstellung bewegt wird.

17. Fahrzeug nach einem der Ansprüche 11 bis 16,
dadurch **gekennzeichnet,**
daß die vorderen und hinteren Schwenkachsen (32, 37) einen Abstand in Querrichtung aufweisen.

18. Fahrzeug nach einem der vorhergehenden Ansprüche,
dadurch **gekennzeichnet,**
daß ein Linearstellglied (40) zwischen dem Fahrgestell (10) und der Steuerkonsole (20) angekoppelt ist, um eine Vorwärts-Rückwärts-Bewegung der Steuerkonsole (20) zu bewirken.

19. Fahrzeug nach Anspruch 18,
dadurch **gekennzeichnet,**
daß das Linearstellglied (40) durch einen Schalter (45) elektrisch gesteuert ist, der auf der Steuerkonsole (20) befestigt ist.

## Revendications

1. Véhicule comprenant:
- un châssis mobile (10);
- des commandes de conduite (14) soutenues par ledit châssis (10) pour contrôler ma direction de mouvement dudit châssis mobile par rapport au sol;
- un siège (15) soutenu à proximité desdites commandes de conduite (14) avec au moins un mouvement d'avant en arrière par rapport à elles; et
- une console de commande (20) comportant plusieurs systèmes fonctionnels de commande (21, 23, 24, 26) à proximité dudit siège (15); ladite console de commande (20) étant déplaçable indépendamment par rapport audit siège (15); et
caractérisé en ce qu'un ensemble de soutien (30, 50) maintient ladite console de commande (20) sur ledit châssis (10) pour permettre à ladite console (20) de se déplacer par rapport audit siège suivant un tracé prédéterminé.

2. Véhicule selon la revendication 1, caractérisé en ce que ledit siège (15) pivotant entre une position de manoeuvre du véhicule en direction avant et une position de manoeuvre d'outil pivotée suivant un angle prédéterminé de rotation par rapport à ladite position de manoeuvre du véhicule afin de faciliter la surveillance du fonctionnement d'un outil accroché à l'arrière dudit véhicule lorsque ledit véhicule se déplace dans une direction vers l'avant.

3. Véhicule selon les revendications 1 ou 2, caractérisé en ce que ladite console (20) de commande est déplaçable vers l'avant et vers l'arrière à partir d'une position médiane, son mouvement vers l'avant de la position médiane se fait généralement dans une direction longitudinale avec un mouvement transversal minimum.

4. Véhicule selon la revendication 2, caractérisé en ce que le mouvement de ladite console (20) de commande vers l'arrière de ladite position médiane entraîne une rotation transversale de ladite console de commande de manière à correspondre à la rotation angulaire prédéterminée dudit siège lors du déplacement de ladite position de manoeuvre du tracteur à ladite position de manoeuvre de l'outil.

5. Véhicule selon l'une quelconque des revendications précédentes, caractérisé en ce que ledit ensemble (30, 50) de soutien comprend un ensemble (50) de guidage fixé au chassis (10), ledit ensemble (50) de guidage contrôlant l'orientation de ladite console (20) de commande à l'intérieur de la portée de son mouvement.

6. Véhicule selon la revendication 5, caractérisé en ce que ledit ensemble (50) de guidage comprend des moyens (51) de guidage associables avec les deux parties avant et arrière de ladite console (20) de commande pour l'orientation de ladite console (20) au cours de son mouvement.

7. Véhicule selon la revendication 6, caractérisé en ce que lesdits moyens (51) de guidage comprennent une tôle (52) possédant une rainure (53) avant et une rainure (54) arrière, ladite console (20) de commande étant pourvue d'organes (56, 57) de guidage se prolongeant au travers desdites rainures (53, 54) correspondantes pour guider le mouvement de ladite console (20) de commande.

8. Véhicule selon la revendication 7, caractérisé en ce que chacune desdites rainures (53, 54) comprend une partie oblique pour effectuer une rotation de ladite console (20) de commande au cours du mouvement de celle-ci.

9. Véhicule selon la revendication 8, caractérisé en ce que lesdites parties obliques sont orientées à la partie arrière desdites rainures (53, 54) pour effectuer une rotation angulaire de ladite console (20) de commande à proximité de la limite arrière d'une portée de mouvements, permettant à ladite console (20) de commande de correspondre à la position de manoeuvre d'outil du siège (15) du conducteur.

10. Véhicule selon une quelconque des revendications 1 à 4, caractérisé en ce que ledit ensemble (30, 50) de soutien comprend une liaison (30) de montage reliant ladite console (20) de commande et ledit châssis (10) pour soutenir ladite console (20) de commande pour se mouvoir par rapport audit siège (15).

11. Véhicule selon la revendication 10, caractérisé en ce que ladite liaison (30) de montage comprend des ensembles (31, 36) de pivotement avant et arrière, espacés longitudinalement, définissant des axes (32, 37) respectifs de pivotement avant et arrière autour desquels ladite console (20) est pivotable.

12. Véhicule selon la revendication 11, caractérisé en ce que chacun desdits ensembles (31, 36) comprend un bras (33, 38) de balancement pouvant pivoter à une de ses extrémités autour de l'axe (32, 37) respectif de pivotement et soutenant ladite console (20) de commande en son extrémité opposée.

13. Véhicule selon la revendication 12, caractérisé en ce que lesdits bras (33, 38) avant et arrière de balancement s'étendent à partir de leur dit axe (32, 37) de pivotement dans des directions opposées afin de réaliser une rotation transversale de ladite console (20) de commande lors d'un déplacement vers l'arrière à partir de sa position médiane.

14. Véhicule selon la revendication 13, caractérisé en ce que, lorsque ladite console (20) de commande se trouve dans ladite position médiane, lesdits bras (33, 38) de balancement sont orientés suivant un déboîtement angulaire prédéterminé vers l'arrière par rapport à une direction transversale, l'extension du mouvement vers l'avant de ladite console (20) de commande à partir de la position médiane étant limitée à environ deux fois ledit déboîtement angulaire prédéterminé, de telle façon que le mouvement complet vers l'avant de ladite console (20) de commande à partir de la position médiane n'entraîne pas de mouvement transversal substantiel de ladite console (20) de commande.

15. Véhicule selon la revendication 14, caractérisé en ce que le mouvement de ladite console (20) de commande vers l'arrière de ladite position médiane entraîne un mouvement de pivotement desdits bras (33, 38) de balancement vers une ligne longitudinale passant par ledit axe (32, 37) correspondant de pivotement, se traduisant par un déplacement transversal de ladite console (20) de commande, l'orientation desdits bras (33, 38) de balancement en directions opposées entraînant une rotation transversale de ladite console (20) de commande.

16. Véhicule selon la revendication 15, caractérisé en ce que lesdits bras (33, 38) de balancement sont orientés de telle manière que l'extension de leur mouvement vers l'arrière de ladite position médiane se traduit par rotation transversale substantiellement équivalente à la rotation angulaire dudit siège (15) à partir de la position de manoeuvre du tracteur, en direction de la position de manoeuvre d'outil.

17. Véhicule selon une quelconque des revendications 11 à 16, caractérisé en ce que les axes (32, 37) avant et arrière de pivotement sont espacés transversalement.

18. Véhicule selon une quelconque des revendications précédentes, caractérisé en ce qu'un actionneur (40) linéaire est accouplé entre ledit châssis (10) et ladite console (20) de commande pour effectuer un mouvement d'avant en arrière de ladite console (20) de commande.

19. Véhicule selon la revendication 18, caractérisé en ce que ledit actionneur (40) linéaire est commandé électriquement à partir d'un interrupteur (45) monté sur ladite console (20) de commande.
